# EUROPÄISCHE PATENTSCHRIFT

(11) **EP 0 613 999 B1**
(45) Veröffentlichungstag und Bekanntmachung des Hinweises auf die Patenterteilung: **18.10.1995**
(21) Anmeldenummer: 93118354.5
(22) Anmeldetag: 12.11.1993
(51) Int. Cl.: F02B 27/02, F02M 35/10

(54) **Luftansaugkanalsystem für Brennkraftmaschinen**
Air inlet conduit system for internal combustion engines
Système de canal d'admission d'air pour moteurs à combustion interne

(30) Priorität: 05.03.1993 DE 9303172 U
(43) Veröffentlichungstag der Anmeldung: 07.09.1994
(73) Patentinhaber: Pierburg Aktiengesellschaft, 41460 Neuss (DE)
(72) Erfinder: Kühnel, Hans-Ulrich, D-41239 Mönchengladbach (DE); Heusler, Dirk, D-50674 Köln (DE)

(56) Entgegenhaltungen:
- EP-A- 0 201 180
- DE-A- 3 829 522
- DE-U- 8 914 049

## Beschreibung

Die Erfindung betrifft ein Luftansaugkanalsystem für Brennkraftmaschinen nach dem Oberbegriff des Schutzanspruchs.

Derartige Luftansaugkanalsysteme werden mit spiralförmig verlaufenden Einzelansaugkanälen ausgestattet, um raumsparend lange Ansaugkanäle zu realisieren, wobei unter Umständen Vorrichtungen zur Umschaltung auf eine Verkürzung der Ansaugkanäle vorgesehen sein können (zum Beispiel DE-OS 38 30 286).

Aus der DE-U1 89 14 049.4 ist bereits bekannt, ein Verteilergehäuse aus mehreren Teilstücken zusammenzusetzen, wobei die in bezug auf einen Sammeleinlaßkanal innenliegenden Wandungen von Einzelansaugkanälen und die Wandung des Sammeleinlaßkanals von Paßstücken gebildet sind, die von den Dichtflächen ausgehend in die Teilstücke eingesetzt sind, wodurch die Herstellung einiger Teile im Druckgußverfahren oder Kokillengußverfahren möglich wird. Es hat sich jedoch gezeigt, daß der Sammeleinleßkanal, dessen Größe von der erforderlichen Länge der Ansaugkanäle abhängt, volumenmäßig zu groß ist und zu Übergangsfehlern bei Lastwechseln des Motorbetriebs führt.

Mit diesen Brennkraftmaschinen ausgestattete Fahrzeuge beziehen als Antriebsenergie für pneumatische Stellelemente für Fahrzeug- oder Motorausrüstungen wie Brems-, Kupplungsautomatik-, Türverriegelungs- oder Abgasrückführsysteme den während Schub- oder Leerlaufphasen der Brennkraftmaschine vorliegenden, niedrigen Ansaugdruck, der stromab der Luftdrosselklappe herrscht und in einem Unterdruckbehälter gespeichert wird.

Dieser Unterdruckbehälter weist eine erhebliche Größe auf, so daß er nur schwierig im Fahrzeug angeordnet werden kann.

Hiervon ausgehend liegt der Erfindung die Aufgabe zugrunde, ein gattungsbildendes Luftansaugkanalsystem derart zu gestalten, daß das Volumen des Sammeleinlaßkanals ohne Aufgabe der vorteilhaften Herstellung verringert wird, wobei eine Bauraumverminderung insgesamt erreichbar sein soll.

Diese Aufgabe ist durch die im Kennzeichen des Schutzanspruchs 1 genannten Merkmale gelöst worden. Vorteilhafte Herstellweisen sind mit dem Unteranspruch angegeben.

Mit der Erfindung ist ein kostengünstiges Luftansaugkanalsystem erreicht worden, das gegenüber bekannten Ausführungen funktionelle Vorteile hat und Bauraum spart, wie in der nachfolgenden Beschreibung eines in der Zeichnung dargestellten Ausführungsbeispiels noch näher erläutert wird.

Die Zeichnung zeigt:

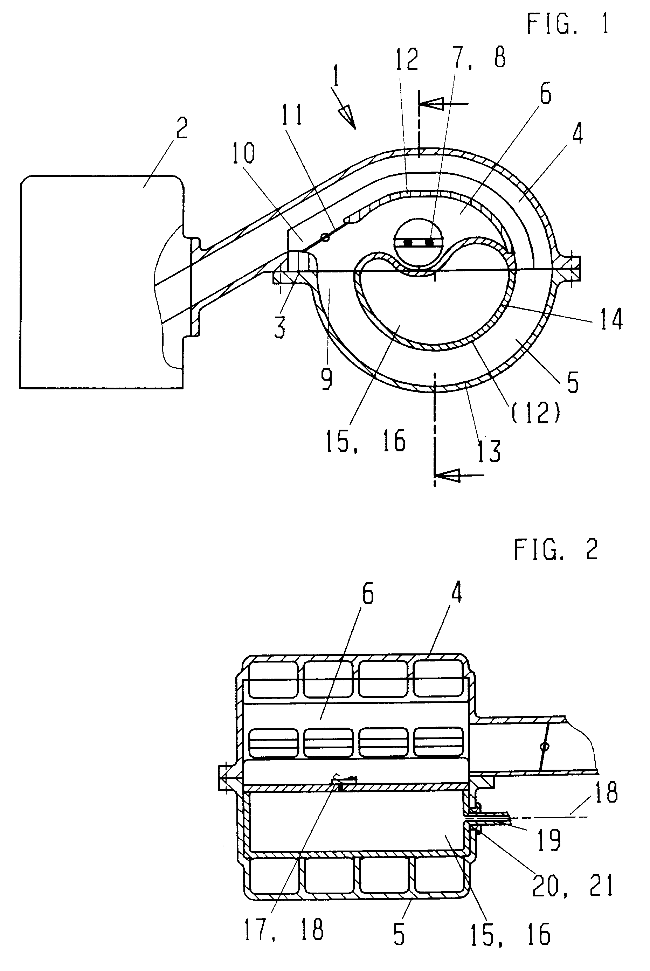

- **Fig. 1 und 2,**: Schnitte durch ein erfindungsgemäßes Luftansaugkanalsystem.

Fig. 1 zeigt einen Querschnitt eines Luftansaugkanalsystems 1 einer Brennkraftmaschine, aus dem ein Zylinderkopf 2 der Brennkraftmaschine sowie eine Teilungsebene 3 von Dichtflächen zweier Teilstücke 4, 5 erkennbar sind, die miteinander verschraubt das Luftansaugkanalsystem 1 bilden. Dieses weist einen zentral angeordneten Sammeleinlaßkanal 6 auf, in den ein Lufteinlaßkanal 7 einmündet, der von einer Drosseleinrichtung 8 kontrolliert wird. Von dem Sammeleinlaßkanal 6 zweigen spiralförmig ausgebildete, zu den Zylindern der Brennkraftmaschine führende Einzelansaugkanäle 9 ab, wobei jeder dieser Kanäle 9 über einen Kurzschlußkanal 10 direkt mit dem Sammeleinlaßkanal 6 verbunden werden kann, wenn eine in den Kurzschlußkanälen 10 angeordnete Luftklappe 11 in Öffnungsstellung gebracht wird. Mit diesen Luftklappen 11 kann je nach Betriebsart der Brennkraftmaschine eine Steuerung der Einzelansaugkanallängen (kurz oder lang) erfolgen.

Die in bezug auf den Sammeleinlaßkanal 6 innenliegenden Wandungen 12 der Einzelansaugkanäle 9 und die Wandung 13 des Sammeleinlaßkanals 6 sind von einem spiralförmigen Paßstück 14 und einem weiteren als Formblasteil 15 ausgeführten Paßstück gebildet, die von den Dichtflächen ausgehend in die entsprechenden Ausnehmungen der Teilstücke 4, 5 eingesetzt sind.
Das Formblasteil 15 dient als Unterdruckspeicher, der über ein Rückschlagventil 16 mit dem Sammeleinlaßkanal 6 und mit Unterdruckanschlüssen 19 über Unterdruckleitungen mit den entsprechenden Pneumatikelementen von Motor- bzw. Fahrzeugausrüstungen verbunden ist. Der Unterdruckspeicher kann jedoch auch durch ein aus mehreren Druckgußteilen zusammengesetztes und luftdicht verbundenes Bauteil ausgeführt sein.

Die Teilstücke 4 und 5 sowie das Paßstück 14 können in Druckgußformen hergestellt werden und sind direkt ausformbar, wobei der gerade Teilabschnitt der Einzelansaugkanäle 9 über einen Kernzug entformt wird.

Fig. 2 zeigt einen Längsschnitt des Luftansaugsystems nach Fig. 1 mit dem Teilstück 4, 5 und dem den Unterdruckspeicher bildenden Formblasteil 15. Der Innenraum 16 des Formblasteils 15 ist über eine Öffnung 17 mit Rückschlagventil 18 mit dem Sammeleinlaßkanal 6 verbunden, so daß bei niedrigem Ansaugdruck Luft aus dem Innenraum 16 abgesaugt wird.

Das Formblasteil 15 ragt mit einem Unterdruckanschluß 19 aus dem Teilstück 5 nach außen heraus, wobei eine elastische Dichtung 20 eine dafür vorgesehene Öffnung 21 abdichtet. Der Unterdruckanschluß 19 ist mit einem oder mehreren Pneumatikelementen von nicht dargestellten Fahrzeug- oder Motorausrüstungen verbunden.

Mit der Erfindung ist eine kostengünstige Fertigung und durch glatte Kanalwände eine funktionelle Verbesserung gegenüber bekannten Ausführungen erreichbar geworden. Die Integration des Unterdruckspeichers bewirkt eine Bauraumverminderung und den Wegfall von Unterdruckleitungen.

## Patentansprüche

1. Luftansaugkanalsystem für Brennkraftmaschinen, mit einem zentral angeordneten Sammeleinlaßkanal und von diesem spiralförmig zu den Zylindern führenden Einzelansaugkanälen, gebildet aus zwei Teilstücken, die mit in Spiralachsrichtung verlaufenden Dichtflächen aneinandergefügt und verbunden sind, wobei die in bezug auf den Sammeleinlaßkanal innenliegenden Wandungen der Einzelansaugkanäle und die Wandung des Sammeleinlaßkanals von Paßstücken gebildet sind, die von den Dichtflächen ausgehend in die Teilstücke eingesetzt sind, dadurch gekennzeichnet, daß wenigstens eines der Paßstücke als Unterdruckspeicher ausgeführt ist, der über ein Rückschlagventil (16) mit dem Sammeleinlaßkanal (6) und mit Unterdruckanschlüssen (19) über Unterdruckleitungen mit den entsprechenden Pneumatikelementen von Motor- bzw. Fahrzeugausrüstungen verbindbar ist.

2. Luftansaugkanalsystem nach Anspruch 1, dadurch gekennzeichnet, daß der Unterdruckspeicher als Formblasteil (15) oder als aus mehreren Druckgußteilen zusammengesetztes und luftdicht verbundenes Bauteil ausgeführt ist.

## Claims

1. Air inlet conduit system for internal combustion engines, with a centrally arranged inlet manifold and individual inlet conduits which lead from the latter in the form of spirals to the cylinders and are formed from two sub-pieces which are assembled and connected by way of sealing surfaces extending in the axial direction of the spirals, wherein the walls of the individual inlet conduits which are on the inside in relation to the inlet manifold and the wall of the inlet manifold are formed by adapters which, starting from the sealing surfaces, are inserted in the sub-pieces, characterised in that at least one of the adapters is formed as a vacuum store which can be connected to the inlet manifold (6) via a non-return valve (16) and to the corresponding pneumatic elements of engine or vehicle fittings via vacuum lines by way of vacuum connections (19).

2. Air inlet conduit system according to claim 1, characterised in that the vacuum store is a blow moulded part (15) or a component which is composed of a plurality of pressure die castings and connected in an airtight manner.

## Revendications

1. Dispositif de conduits d'admission d'air pour moteurs à combustion interne, avec un collecteur d'admission central et des conduits d'admission individuels en forme de spirale, menant de ce dernier aux cylindres, formé de deux pièces partielles, assemblées et aboutées par des surfaces d'étanchéité situées dans le sens axial de la spirale, les parois des conduits d'admission individuels, internes par rapport au collecteur d'admission, et la paroi du collecteur d'admission étant formées par des pièces d'adaptation, logées dans les pièces partielles à partir des surfaces d'étanchéité, caractérisé en ce que l'une des pièces d'adaptation, au moins, est réalisée sous forme d'accumulateur de dépression, qui peut être relié au collecteur d'admission (6) par l'intermédiaire d'un clapet antiretour (16), et aux éléments pneumatiques correspondants des équipements du moteur et/ou du véhicule par des raccords de dépression (19), par l'intermédiaire de conduites de dépression.

2. Dispositif de conduits d'admission d'air selon la revendication 1, caractérisé en ce que l'accumulateur de dépression est réalisé sous forme de pièce soufflée (15), ou de composant formé de plusieurs pièces coulées sous pression et assemblé d'une manière étanche à l'air.
